# EUROPÄISCHE PATENTSCHRIFT

(11) **EP 1 851 841 B1**
(45) Veröffentlichungstag und Bekanntmachung des Hinweises auf die Patenterteilung: **29.05.2013**
(21) Anmeldenummer: 06708443.4
(22) Anmeldetag: 22.02.2006
(51) Int. Cl.: B63G 8/08, B63H 23/24

(54) **U-BOOT-GLEICHSTROMNETZ**
SUBMARINE DIRECT CURRENT NETWORK
RESEAU A COURANT CONTINU POUR SOUS-MARIN

(30) Priorität: 25.02.2005 DE 102005008766
(43) Veröffentlichungstag der Anmeldung: 07.11.2007
(73) Patentinhaber: Siemens Aktiengesellschaft, 80333 München (DE)
(72) Erfinder: AHLF, Gerd, 91369 Wiesenthau (DE)
(86) Internationale Anmeldenummer: PCT/EP2006/060169
(87) Internationale Veröffentlichungsnummer: WO 2006/089904

(56) Entgegenhaltungen:
- EP-A- 1 484 243
- EP-A- 1 498 997
- WO-A-02/15361

## Beschreibung

Die Erfindung betrifft ein U-Boot-Gleichstromnetz gemäß Patentanspruch 1.

Als elektrische Fahranlagen und Bordnetze ausgebildete U-Boot-Gleichstromnetze sind dem Charakter nach Inselnetze und unterliegen in ihrem Betrieb besonderen Anforderungen. Sie sind meist als Niederspannungsnetze mit hohen Betriebsspannungen bzw. Potenzialen bis DC 1000 V ausgebildet.

Ein solches U-Boot-Gleichstromnetz weist Energieerzeuger wie z.B. Generatoren, Batterien, ggf. Brennstoffzellen auf, die einen oder mehrere Energieverbraucher wie z.B. Fahrmotoren oder ein Bordnetz zur Speisung von Hilfsantrieben mit Energie versorgen. Die Energieerzeuger und die Energieverbraucher sind über Schutz- und Schaltorgane miteinander verbunden, die zum einen ein betriebliches Zu- oder Abschalten (z.B. zur Einstellung verschiedener Fahrschaltungen) und zum anderen im Fehlerfall, insbesondere im Fall eines Kurzschlusses, ein Abschalten einzelner Energieverbraucher, Energieerzeuger oder bestimmten Teilen des Gleichstromnetzes ermöglichen sollen.

Zur Verbesserung des Betriebsverhaltens, zur Erhöhung der Spannungsstabilität und zur Verringerung von Netzrückwirkungen sind U-Boot-Gleichstromnetze sehr niederimpedant ausgelegt. Gleichzeitig weisen diese Netze, insbesondere in antriebsstarken U-Booten neuerer Bauart, eine Vielzahl von Energieerzeugern, z. B. bis 8 Batterien und Generatoren, auf. Als Folge sind in solchen Netzen außerordentlich hohe, energiereiche und verhältnismäßig lang anhaltende Summenkurzschlussströme bis über 300 kA möglich. Derartig hohe Summenkurzschlussströme können nicht mit herkömmlichen, kommerziell erhältlichen Kombinationen aus Sollschmelzstellen und Leistungsschaltern begrenzt bzw. abgeschaltet werden, da Sollschmelzstellen typischerweise nur Kurzschlussströme bis ca. 200 kA begrenzen und Leistungsschalter typischerweise nur Kurzschlussströme bis ca. 100 kA abschalten können.

Aus der WO 02/15361 ist es bekannt, die vorstehend erwähnten hohen Summenkurzschlussströme durch Hochtemperatursupraleiter (HTS)-Strombegrenzer zu begrenzen, und anschließend mit Leistungsschaltern abzuschalten. Derartige HTS-Strombegrenzer werden von der Anmelderin beispielsweise unter dem Produktnamen SINAVY^{CIS} HTS FCL vertrieben.

Es ist Aufgabe vorliegender Erfindung, ein U-Boot-Gleichstromnetz anzugeben, welches auch ohne Einsatz von HTS-Technik bei sehr hohen, energiereichen und verhältnismäßig lang anhaltenden Teil- und Summenkurzschlussströmen bis über 300 kA einen Kurzschlussschutz ermöglicht, wobei gleichzeitig eine hohe Verfügbarkeit des Netzes gewährleistet sein soll.

Die Lösung dieser Aufgabe gelingt dadurch, dass das U-Boot-Gleichstromnetz zwei Teilnetze aufweist, die über eine Netzkupplung miteinander verbunden sind, wobei die zwei Teilnetze jeweils zumindest eine Energieerzeugereinheit und eine Energieverbrauchereinheit aufweisen, die über eine oder mehrere Kombinationen aus jeweils einer Sollschmelzstelle und einem in Reihe dazu geschalteten Leistungsschalter miteinander verbunden sind. Die Netzkupplung weist dabei eine Sicherungskombination auf, die bei einem Kurzschluss in einem der beiden Teilnetze eine kürzere Ansprechzeit aufweist als die Kombinationen aus einer Sollschmelzstelle und einem in Reihe dazu geschalteten Leistungsschalter. Unter einer Sicherungskombination wird hierbei eine Parallelschaltung zweier oder mehrerer (Einzel-)Sicherungen verstanden.

Vorteilhafte Ausgestaltungen der Erfindung sind jeweils Gegenstand der Unteransprüche.

Durch die Aufteilung des Netzes in zwei Teilnetze, die jeweils zumindest eine Energieerzeugereinheit und eine Energieverbrauchereinheit aufweisen, und die Kupplung dieser beiden Teilnetze über eine Netzkupplung fließen im Fall eines Kurzschlusses in einem der beiden Teilnetze die Kurzschlussströme des fehlerfreien anderen Teilnetzes über die Sicherungskombination in der Netzkupplung. Da die Ansprechzeit der Sicherungskombination kürzer ist als die der Kombinationen aus Sollschmelzstelle und Leistungsschalter im Kurzschlusspfad, erfolgt im Kurzschlussfall sehr rasch eine Trennung der beiden Teilnetze, bevor es zu einem Ansprechen der Kombinationen aus Sollschmelzstelle und Leistungsschalter kommt. Durch den Wegfall des Kurzschlussstromes des fehlerfreien Teilnetzes wird der Summenkurzschlussstrom in dem fehlerhaften Teilnetz auf einen Wert verringert, der eine Begrenzung durch die Sollschmelzstelle im Kurzschlusspfad und eine abschließende Abschaltung durch einen Leistungsschalter ermöglicht. Da die Netztrennung vor einem eventuellen Ansprechen einzelner Sollschmelzstellen in dem fehlerfreien Teilnetz erfolgt, kann die Funktionsfähigkeit des fehlerfreien Teilnetzes und somit die Verfügbarkeit des Gleichstromnetzes aufrechterhalten werden.

Die Aufteilung des U-Boot-Gleichstromnetzes in zwei Teilnetze und die betriebsmäßige Kopplung dieser beiden Teilnetze ermöglicht bei einem Ausfall der Energieerzeugung in einem Teilnetz eine Energieversorgung dieses Teilnetzes über die Netzkupplung durch das andere Teilnetz, wodurch die Verfügbarkeit des Gleichstromnetzes insgesamt erhöht werden kann.

Die Sicherungskombination ist vorzugsweise auf den maximal über die Netzkupplung auftretenden Dauerbetriebsstrom und kurzzeitige Stromspitzen ausgelegt. Dieser Dauerbetriebsstrom kann durch den Strom über die Netzkupplung im Normalbetrieb des Gleichstromnetzes bei bestimmten betriebsmäßigen Verschaltungen der Energieerzeuger und -verbraucher oder aber durch den Strom über die Netzkupplung im Störungsfall bei einer Energieversorgung eines Teilnetzes durch das andere Teilnetz definiert werden.

Die benötigte schnelle Trennung der beiden Teilnetze, z.B. innerhalb von ca. 5 bis 10 ms, ist mit einer einzelnen, auf diesen Dauerbetriebsstrom ausgelegten Sicherung nicht möglich, da deren Ansprechzeit viel zu lange wäre. Statt einer einzigen großen Sicherung wird deshalb in der Netzkupplung eine Kombination mehrerer kleinerer Sicherungen mit entsprechend kürzeren Ansprechzeiten vorgesehen, die parallel geschaltet sind. Durch die Parallelschaltung mehrerer (Einzel-) Sicherungen, die jeweils für sich nur einen Teil, in Parallelschaltung jedoch den gesamten betriebsmäßig über die Netzkupplung fließenden Dauerbetriebsstromes tragen können, kann gleichzeitig eine kurze Ansprechzeit für eine schnelle Trennung der beiden Teilnetze und ein hoher Dauerbetriebsstrom über die Netzkupplung ermöglicht werden.

Durch das Zusammenwirken der erfindungsgemäßen Maßnahmen ist es somit möglich, auch ohne Einsatz von HTS-Technik gleichzeitig eine hohe Verfügbarkeit des Netzes und einen Kurzschlussschutz bei Kurzschlussströmen bis über 300kA zu erzielen.

Ein möglichst genaues Ansprechen der einzelnen Sicherungen der Sicherungskombination kann dadurch erzielt werden, dass die Stromaufteilung auf die einzelnen Sicherungen der Sicherungskombination möglichst gleichmäßig erfolgt. Dies kann dadurch ermöglicht werden, dass sämtliche Parallelpfade der Sicherungskombination einen jeweils gleichen elektrischen Widerstand aufweisen. Dies ist beispielsweise dadurch möglich, dass gleiche Anschlussleiter mit jeweils gleichen Gesamtleiterlängen in den einzelnen Parallelpfaden verwendet werden.

Wenn die zwei Teilnetze einen zueinander symmetrischen Aufbau aufweisen, d.h. eine jeweils gleiche Anzahl von Energieerzeugern und -verbrauchern aufweisen, kann der potenziell über die Netzkupplung 4 fließende Dauerbetriebsstrom besonders klein gehalten und die Sicherungskombination kann hierdurch auf besonders geringe Dauerbetriebsströme und somit besonders kurze Ansprechzeiten ausgelegt werden.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: eine Prinzipdarstellung eines erfindungsgemäßen U-Boot-Gleichstromnetzes,
- FIG 2: das Gleichstromnetz von FIG 1 in der Betriebsart "Vorwärtsfahrt und Batterieladung",
- FIG 3: das Gleichstromnetz von FIG 1 in der Betriebsart "höchste Fahrtstufe",
- FIG 4: eine Sicherungskombination mit drei parallel geschalteten Sicherungen mit gleichmäßiger Stromaufteilung,
- FIG 5: eine Sicherungskombination mit acht parallel geschalteten Sicherungen mit gleichmäßiger Stromaufteilung,
- FIG 6: eine Sicherungskombination mit einem in Reihe geschalteten zweipoligen Leistungsschalter mit gleichmäßiger Stromaufteilung und
- FIG 7: eine Sicherungskombination mit einem in Reihe geschalteten Leistungsschalter in streufeldarmer Ausführung.

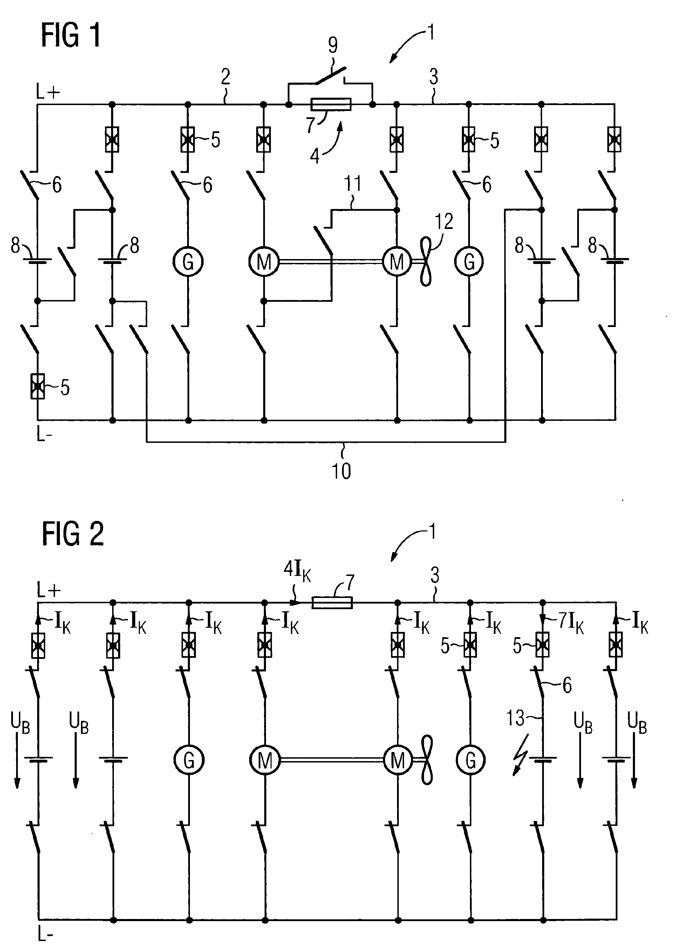

FIG 1 zeigt eine Prinzipdarstellung eines Gleichstrom-Fahrnetzes eines U-Bootes mit zwei Teilnetzen 2 und 3 mit zueinander symmetrischem Aufbau, die über eine Netzkupplung 4 miteinander verbunden sind. Jedes der Teilnetze 2, 3 weist zur Energieerzeugung einen Generator G und zwei Batterien 8 auf. Die erzeugte Energie wird zur Speisung eines Motors M (z.B. DC-Motor oder DC-gespeister Motor) zum Antrieb eines Propellers 12 des U-Bootes sowie eines nicht näher dargestellten Bordnetzes verwendet. Die Teilnetze 2,3 können natürlich auch jeweils mehrere parallel geschaltete Generatoren G aufweisen.

Die einzelnen Komponenten der Teilnetze 2, 3 sind über eine oder mehrere Kombinationen aus jeweils einer Sollschmelzstelle 5 und jeweils einem in Reihe dazu geschalteten Leistungsschalter 6 mit Überstromauslöser miteinander verbunden. Die Sollschmelzstelle besteht im Wesentlichen aus einem schienenförmigen Leiter, der in der Mitte eine Engstelle aufweist, die für einen definierten Dauerbetriebsstrom ausgelegt ist. Im Fall eines Kurzschlussstromes, der deutlich größer als der Dauerbetriebsstrom ist, zündet an dieser Engstelle ein Lichtbogen, der einen Lichtbogenwiderstand erzeugt, der den Kurzschlussstrom innerhalb der Öffnungsverzugszeit des in Reihe geschalteten Leistungsschalters auf dessen Ausschaltvermögen begrenzt.

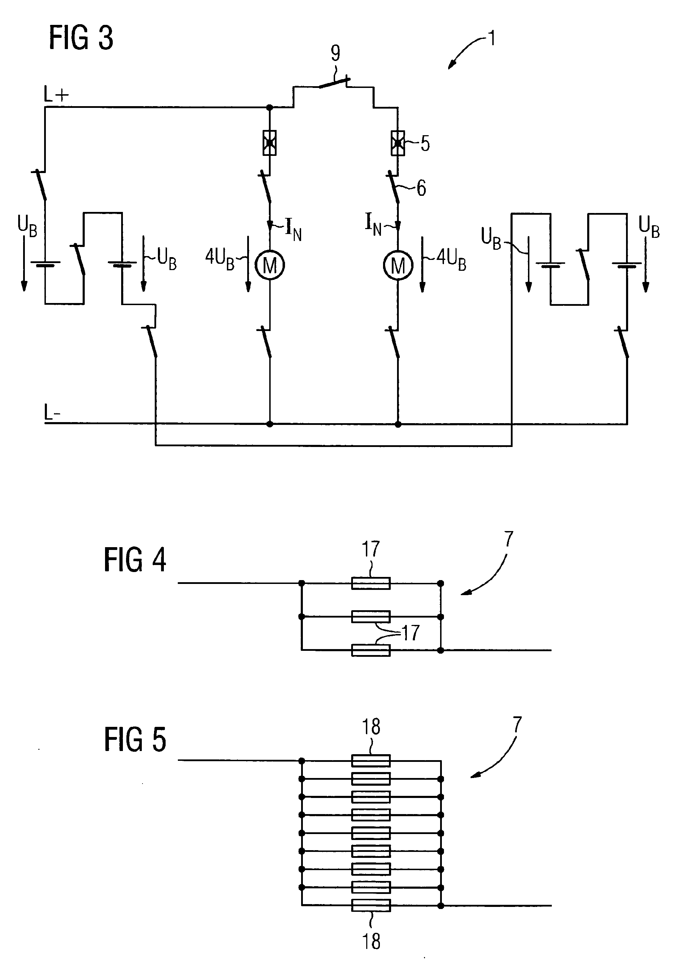

Die Netzkupplung 4 weist eine Sicherungskombination 7 auf, die beispielsweise drei (siehe FIG 4) oder acht (siehe FIG 5 bis 7) parallel geschaltete Einzelsicherungen umfasst. Mit Hilfe eines Leistungsschalters 9 kann die Sicherungskombination 7 überbrückt werden.

Die Energieerzeuger und -verbraucher können mittels der Leistungsschalter 6 und über die Abzweige 10 und 11 elektrisch parallel oder in Serie geschaltet werden.

In der in FIG 2 gezeigten Betriebsart "Vorwärtsfahrt und Batterieladung" sind sämtliche Energieerzeuger und Energieverbraucher in den beiden Teilnetzen 2,3 parallel geschaltet, d.h. die Generatoren G versorgen die Motoren M mit Energie und laden die Batterien 8. Bei einem Kurzschluss in einem der beiden Teilnetze (gezeigt ist als Beispiel ein Kurzschluss in einem Strompfad 13 des Teilnetzes 3) erzeugt jeder der Parallelzweige des fehlerfreien Teilnetzes 2 einen Kurzschlussstrom IK über die Netzkupplung 4, so dass über die Netzkupplung 4 insgesamt ein Summenkurzschlussstrom von 4*Ik fließt.

In dem kurzschlussbehafteten Strompfad 13 fließen somit die Kurzschlussströme der drei jeweils parallel geschalteten Energieerzeuger- und -verbraucher des Teilnetzes 3 (d.h. 3*Ik), sowie der über die Netzkupplung fließende Summenkurzschlussstrom von 4*Ik, in der Summe somit 7*Ik. Ein derartig hoher Summenkurzschlussstrom kann von der Sollschmelzstelle 5 des kurzschlussbehafteten Strompfades 13 nicht mehr begrenzt werden.

Die Sicherungskombination 7 ist deshalb derart ausgebildet, dass sie in einem solchen Kurzschlussfall eine kürzere Ansprechzeit aufweist als die Kombination aus Sollschmelzstelle 5 und Leistungsschalter 6 in dem kurzschlussbehafteten Strompfad 13. Somit ist gewährleistet, dass bei einem Kurzschluss in einem der beiden Teilnetze eine schnelle Trennung des kurzschlussbehafteten Teilnetzes von dem fehlerfreien Teilnetz erfolgt. Hierdurch wird zum einen der Kurzschlussstrom in dem Strompfad 13 des kurzschlussbehafteten Teilnetz 3 auf einen Wert verringert, der von der Kombination aus Sollschmelzstelle 5 und Leistungsschalter 6 beherrscht werden kann, zum anderen kann ein eventuelles Ansprechen der Sollschmelzstellen 5 und Leistungsschalter 6 des fehlerfreien Teilnetzes 2 vermieden und somit die Funktionsfähigkeit des fehlerfreien Teilnetzes 2 aufrechterhalten werden.

Nach erfolgter Netztrennung und dadurch bewirkter Verringerung des Kurzschlussstromes in dem Strompfad 13 kommt es durch den verbleibenden Summenkurzschlussstrom zu einer Zündung der Sollschmelzstelle 5 des Strompfades 13 und somit zu einer nochmaligen Verringerung des Kurzschlussstromes auf einen Wert, der von dem in Reihe zu der Sollschmelzstelle 5 geschalteten Leistungsschalter 6 abgeschaltet werden kann. Bevorzugt spricht hierbei die Sicherungskombination nach ca. 5 ms, die Sollschmelzstelle nach ca. 10 ms und der Leistungsschalter nach ca. 25 ms an.

In der in FIG 3 gezeigten Betriebsart "höchste Fahrtstufe" sind die Batterien 8 der beiden Teilnetze 2,3 in Serie und die Motoren M der beiden Teilnetze 2,3 hierzu parallel geschaltet. Die Motoren M werden hierdurch bei vierfacher Batteriespannung 4*Ub mit jeweils Nennstrom In von z.B. 3 kA betrieben. Über die Netzkupplung 4 fließt somit dauerhaft der hohe Motorennennstrom In bei gleichzeitig hoher angelegter Spannung von 4*Ub. Andererseits beträgt in dieser Betriebsart der maximale Summenkurzschlussstrom über die Sicherungskombination nur Ik. Da dieser Summenkurzschlussstrom noch von einem Leistungsschalter alleine beherrscht werden kann, kann die Sicherungskombination 7 mit Hilfe des Leistungsschalters 9 überbrückt werden. Sie muss somit nicht auf eine Betriebsspannung in Höhe der vierfachen Batteriespannung 4*Ub, sondern nur auf eine Betriebsspannung in Höhe der (einfachen) Batteriespannung Ub ausgelegt werden.

Das sehr schnelle Ansprechen der Sicherungskombination 7 wird dadurch erzielt, dass statt einer einzigen, auf einen hohen Betriebsstrom ausgelegten und somit mit einer großen Ansprechzeit versehenen Sicherung mehrere parallel geschaltete, Sicherungen verwendet werden, die jeweils auf einen geringeren Dauerbetriebsstrom mit entsprechend geringerer Ansprechzeit ausgelegt sind, in der Summe aber den gewünschten Dauerbetriebsstrom tragen können. So weist die in FIG 4 dargestellte Sicherungskombination 7 drei parallel geschaltete Einzelsicherungen 17 mit einem Bemessungsstrom von jeweils 1000 A, d.h. in der Summe bis max. 3 kA, auf.

Für ein möglichst genaues Ansprechen der einzelnen Sicherungen 17 der Sicherungskombination 7 muss die Stromaufteilung auf die einzelnen Sicherungen 17 möglichst gleichmäßig erfolgen. Dies ist beispielsweise dadurch möglich, dass - wie in FIG 4 vereinfacht dargestellt - gleiche Anschlussleiter mit jeweils gleichen Gesamtleiterlängen in den einzelnen Parallelpfaden der Sicherungskombination 7 verwendet werden.

Die in FIG 5 dargestellte Sicherungskombination 7 weist acht parallel geschaltete Einzelsicherungen 18 mit einem Bemessungsstrom von jeweils 450 A, d.h. in der Summe bis max. 3,6 kA, auf. Auch hier wird - beispielsweise durch gleiche Anschlussleiter mit jeweils gleichen Gesamtleiterlängen in den einzelnen Parallelpfaden - eine gleichmäßige Stromaufteilung auf die einzelnen Parallelpfade sichergestellt.

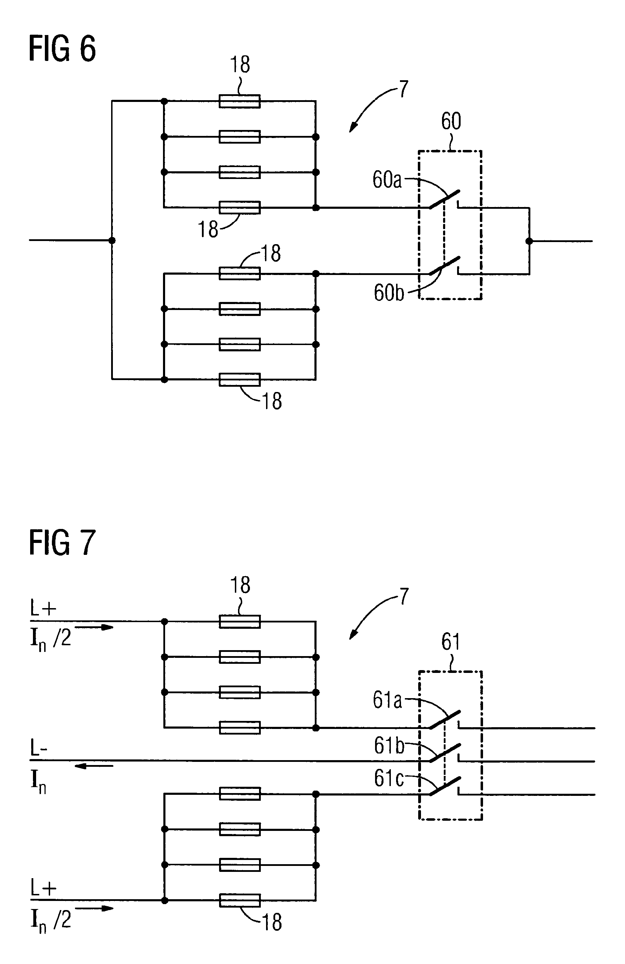

Um ein betriebsmäßiges Zu- oder Abschalten eines Teilnetzes zu ermöglichen, kann in die Netzkupplung in Reihe zu der Sicherungskombination zusätzlich ein Leistungsschalter geschaltet werden. Dieser Leistungsschalter ist bevorzugt zweipolig (siehe FIG 6) oder dreipolig (siehe FIG 7).

Bei Verwendung eines zweipoligen Leistungsschalters (d.h. eines Leistungsschalters mit zwei parallelen Polen) kann eine gleichmäßige Stromaufteilung sowohl auf die einzelne Pfade der Sicherungskombination als auch auf die beiden Pole des Leistungsschalters dadurch erzielt werden, dass die Hälfte der Sicherungen mit einem der beiden Pole und die andere Hälfte der Sicherungen mit dem anderen der beiden Pole verbunden ist. Die FIG 6 zeigt hierzu beispielhaft eine Sicherungskombination 7 mit acht Sicherungen 18 und einem in Reihe dazu geschalteten zweipoligen Leistungsschalter 60, wobei jeder der zwei Pole 60a, 60b des Leistungsschalters 60 mit jeweils vier Sicherungen 18 verbunden ist.

Eine Netzkupplung kann dadurch besonders streufeldarm ausgeführt werden, dass der in Reihe zu der Sicherungskombination 7 geschaltete Leistungsschalter ein dreipoliger Leistungsschalter 61 ist, der - wie in FIG 7 dargestellt - mit seinen drei Polen 61a, 61b, 61c derart in die Netzkupplung schaltbar ist, dass sich die von den durch die drei Pole 61a, 61b, 61c fließenden Ströme erzeugten magnetischen Streufelder zumindest teilweise gegenseitig kompensieren. Hierdurch können elektromagnetische Störungen anderer Komponenten an Bord des U-Bootes vermieden und die Detektierbarkeit des U-Bootes anhand seines Magnetfeldes reduziert werden.

Die Kompensation der magnetischen Streufelder ist dadurch besonders einfach möglich, wenn die drei Pole 61a, 61b, 61c des Leistungsschalters 61 sind hierbei parallel zueinander angeordnet, wobei ein zweiter Pol 61b im Wesentlichen mittig zwischen einem ersten Pol 61a und einem dritten Pol 61c angeordnet ist. Die Pole 61a und 61c sind, genauso wie die Sicherungskombination 7, in die (L+)-Verbindung der Netzkupplung zwischen den Teilnetzen, der Pol 61b dagegen in die (L-)-Verbindung der Netzkupplung geschaltet. Der erste Pol 61a ist mit einer Hälfte der Sicherungen 18 der Sicherungskombination 7 und der dritte Pol 61c mit der anderen Hälfte der Sicherungen 18 der Sicherungskombination 7 verbunden, wobei durch geeignete Maßnahmen eine gleichmäßige Stromaufteilung auf die acht Parallelpfade der Sicherungskombination 7 sichergestellt wird.

Der über die Netzkupplung fließende Strom In teilt sich in der L+-Verbindung auf in zwei gleich große Teilströme In/2, die durch den ersten Pol 61a bzw. den dritten Pol 61c Pol fließen, und die somit jeweils halb so groß wie der durch den zweiten Pol 61b fließende Rückstrom In in der (L-)-Verbindung, jedoch entgegengesetzt zu diesem gerichtet sind, wodurch sich die von den über die Netzkupplung fließenden Strom In erzeugten Magnetfelder zum größten Teil gegenseitig kompensieren.

## Patentansprüche

1. U-Boot-Gleichstromnetz (1) mit zwei Teilnetzen (2, 3), die über eine Netzkupplung (4) miteinander verbunden sind, wobei die zwei Teilnetze (2,3) jeweils zumindest eine Energieerzeugereinheit (G) und eine Energieverbrauchereinheit (M) aufweisen, die über eine oder mehrere Kombinationen aus jeweils einer Sollschmelzstelle (5) und einem in Reihe dazu geschalteten Leistungsschalter (6) miteinander verbunden sind, **dadurch gekennzeichnet, dass** die Netzkupplung (4) eine Sicherungskombination (7) aufweist, die bei einem Kurzschluss in einem der beiden Teilnetze (2, 3) eine kürzere Ansprechzeit aufweist als die Kombinationen aus einer Sollschmelzstelle (5) und einem Leistungsschalter (6).

2. U-Boot-Gleichstromnetz (1) nach Anspruch 1,
**gekennzeichnet durch** eine gleichmäßige Stromaufteilung auf die einzelnen Sicherungen (17 bzw. 18) der Sicherungskombination (7).

3. U-Boot-Gleichstromnetz (1) nach einem der vorhergehenden Ansprüche,
**gekennzeichnet durch** einen parallel zu der Sicherungskombination (7) geschalteten Leistungsschalter (9).

4. U-Boot-Gleichstromnetz (1) nach einem der vorhergehenden Ansprüche,
**gekennzeichnet durch** einen in Reihe zu der Sicherungskombination (7) geschalteten Leistungsschalter (60, 61).

5. U-Boot-Gleichstromnetz (1) nach Anspruch 4,
**dadurch gekennzeichnet, dass** der Leistungsschalter (60) zweipolig ist, wobei eine Hälfte der Sicherungen (18) der Sicherungskombination (7) mit dem einem der beiden Pole (60a) und die andere Hälfte der Sicherungen (18) der Sicherungskombination (7) mit dem anderen der beiden Pole (60b) in Reihe geschaltet sind

6. U-Boot-Gleichstromnetz (1) nach Anspruch 4,
**dadurch gekennzeichnet, dass** der Leistungsschalter (61) dreipolig ist und mit seinen drei Polen (61a, 61b, 61c) derart in die Netzkupplung (4) schaltbar ist, dass sich die von den durch die drei Pole (61a, 61b, 61c) fließenden Ströme erzeugten magnetischen Streufelder zumindest teilweise gegenseitig kompensieren.

7. U-Boot-Gleichstromnetz (1) nach einem der vorhergehenden Ansprüche, **dadurch gekennzeichnet, dass** die zwei Teilnetze (2, 3) einen zueinander symmetrischen Aufbau aufweisen.

## Claims

1. Submarine direct current network (1) comprising two subnetworks (2, 3) which are interconnected by way of a network coupling (4), wherein the two subnetworks (2,3) in each case have at least one energy generator unit (G) and one energy consumer unit (M) which are interconnected by way of one or more combinations made up in each case of a predetermined fusing point (5) and a circuit breaker (6) connected in series therewith, **characterised in that** the network coupling (4) has a fuse combination (7) which in the event of a short-circuit in one of the two subnetworks (2, 3) has a shorter tripping time than the combinations made up of a predetermined fusing point (5) and a circuit breaker (6).

2. Submarine direct current network (1) according to claim 1,
**characterised by** an even distribution of current to the individual fuses (17 or 18) of the fuse combination (7).

3. Submarine direct current network (1) according to one of the preceding claims,
**characterised by** a circuit breaker (9) connected in parallel with the fuse combination (7).

4. Submarine direct current network (1) according to one of the preceding claims,
**characterised by** a circuit breaker (9) connected in series with the fuse combination (7).

5. Submarine direct current network (1) according to claim 4,
**characterised in that** the circuit breaker (60) is of the two-pole type, with half of the fuses (18) of the fuse combination (7) being connected in series with one of the two poles (60a) and the other half of the fuses (18) of the fuse combination (7) being connected in series with the other of the two poles (60b).

6. Submarine direct current network (1) according to claim 4, **characterised in that** the circuit breaker (61) is of the three-pole type and can be connected into the network coupling (4) by means of its three poles (61a, 61b, 61c) in such a way that the stray magnetic fields generated by the currents flowing through the three poles (61a, 61b, 61c) mutually compensate one another at least to some extent.

7. Submarine direct current network (1) according to one of the preceding claims, **characterised in that** the two subnetworks (2, 3) have a mutually symmetrical layout.

## Revendications

1. Réseau (1) à courant continu pour sous-marin, comprenant deux sous-réseaux (2, 3), qui sont reliés entre eux par un couplage (4) de réseau, les deux sous-réseaux (2, 3) ayant respectivement au moins un groupe (G) producteur d'énergie et un groupe (M) consommateur d'énergie, qui sont reliés entre eux par une ou par plusieurs combinaisons constituées chacune d'un point (5) destiné à fondre et d'un disjoncteur (6) monté en série avec lui, **caractérisé en ce que** le couplage (4) de réseau a une combinaison (7) de fusibles qui, s'il se produit un court-circuit dans l'un des deux sous-réseaux (2, 3), a un temps de réponse plus court que les combinaisons d'un point (5) destiné à se rompre et d'un disjoncteur (6).

2. Réseau (1) à courant continu pour sous-marin suivant la revendication 1, **caractérisé par** une répartition uniforme du courant sur les divers fusibles (17 et 18) de la combinaison (7) de fusibles.

3. Réseau (1) à courant continu pour sous-marin suivant l'une des revendications précédentes,
**caractérisé par** un disjoncteur (9) monté en parallèle à la combinaison (7) de fusibles.

4. Réseau (1) à courant continu pour sous-marin suivant l'une des revendications précédentes,
**caractérisé par** un disjoncteur (60, 61) monté en série avec la combinaison (7) de fusibles.

5. Réseau (1) à courant continu pour sous-marin suivant la revendication 4,
**caractérisé en ce que** le disjoncteur (60) est bipolaire, une moitié des fusibles (18) de la combinaison (7) de fusibles est montée en série avec l'un des deux pôles (60a) et l'autre moitié des fusibles (18) de la combinaison (7) de fusibles est montée en série avec l'autre des deux pôles (60b).

6. Réseau (1) à courant continu pour sous-marin suivant la revendication 4,
**caractérisé en ce que** le disjoncteur (61) est tripolaire et peut être monté par ses trois pôles (61a, 61b, 61c) dans le couplage (4) de réseau, de manière à ce que les champs magnétiques de dispersion produits par les courants passant dans les trois pôles (61a, 61b, 61c) se compensent mutuellement, au moins en partie.

7. Réseau (1) à courant continu pour sous-marin suivant l'une des revendications précédentes,
**caractérisé en ce que** les deux sous-réseaux (2, 3) ont une structure symétrique l'une par rapport à l'autre.
